# FASCICULE DE BREVET EUROPEEN

(11) **EP 0 490 725 B1**
(45) Date de publication et mention de la délivrance du brevet: **04.09.1996**
(21) Numéro de dépôt: 91403207.3
(22) Date de dépôt: 27.11.1991
(51) Int. Cl.: H01B 17/30, H02G 3/22

(54) **Dispositif d'obturation d'un passage tubulaire de cable**
Abdichtungsvorrichtung einer rohrförmigen Kabeldurchführung
Sealing device of a tubular cable-passage

(30) Priorité: 07.12.1990 FR 9015339
(43) Date de publication de la demande: 17.06.1992
(73) Titulaire: LE JOINT FRANCAIS, Société en Nom Collectif, F-75008 Paris (FR)
(72) Inventeur: Colin, Olivier, F-95100 Argenteuil (FR)
(74) Mandataire: Ramey, Daniel

(56) Documents cités:
- FR-A- 2 406 903
- FR-A- 2 501 926
- GB-A- 1 315 686

## Description

L'invention concerne un dispositif d'obturation d'un passage tubulaire de câble, tel qu'un câble à conducteurs électriques par exemple.

Il est souvent nécessaire d'obturer à étanchéité un tel passage de câble, au moins à l'une de ses extrémités, d'une part pour empêcher un écoulement de fluide (gazeux ou liquide) dans ce passage le long du câble et, d'autre part, pour empêcher un glissement du câble, sous l'effet de son propre poids, dans le passage.

Jusqu'à présent, on s'est en général contenté de remplir l'extrémité du passage de câble, après pose du câble, d'une matière durcissante, telle que du plâtre, ou d'une matière plus ou moins pâteuse et collante du type mastic. Les résultats ne sont pas toujours satisfaisants, aussi bien au point de vue de l'étanchéité qu'à celui du maintien du câble.

On a également proposé, dans les documents FR-A-2 406 903 et FR-A-2 501 926, de monter autour du câble un manchon cylindrique que l'on introduit dans le passage de câble et que l'on remplit ensuite d'une matière plastique en mousse pour réaliser l'étanchéité. Ce manchon cylindrique en matière rigide comporte à ses extrémités des languettes souples qui, à l'extérieur du passage de câble, sont resserrées sur le câble au moyen d'un ruban adhésif et qui, à l'intérieur de ce passage, sont censées s'appliquer de façon sensiblement étanche sur le câble. Ce dispositif connu est difficile à mettre en oeuvre et ne fournit pas de bons résultats.

On connaît aussi, par le document GB-A-1 315 686, un dispositif dans lequel des conducteurs électriques traversent des rondelles rigides montées aux extrémités d'un cylindre rigide qui est rempli d'une matière d'étanchéité et qui est monté par vissage d'un écrou dans un orifice d'une paroi. Le montage de ce dispositif nécessite cependant un accès libre des deux côtés de la paroi.

L'invention a pour objet un dispositif simple, efficace et peu coûteux, qui permette d'obturer facilement et rapidement un passage de câble et de retenir le câble monté dans ce passage, en résistant à une traction exercée sur le câble.

L'invention a encore pour objet un dispositif de ce type, qui puisse être utilisé aussi bien lors de la pose du câble que sur un câble déjà posé dans le passage.

L'invention a également pour objet un dispositif du type précité, qui puisse s'adapter facilement à différents diamètres de câbles.

Elle propose, à cet effet, un dispositif d'obturation d'un passage tubulaire de câble, comprenant un manchon destiné à être monté autour du câble et introduit dans ledit passage, ce manchon comprenant un orifice ou conduit permettant son remplissage par une matière d'étanchéité et de fixation telle qu'un élastomère autovulcanisant, une résine ou une matière expansive, le manchon ayant, au moins localement, un diamètre externe sensiblement égal au diamètre interne du passage de câble, caractérisé en ce que le manchon est réalisé en une matière souple telle qu'un élastomère ou un thermoplasdtique et comprend des rondelles de matière souple montées dans des gorges de la surface interne du manchon et traversées à étanchéité par le câble en délimitant entre elles dans le manchon et autrour du câble une chambre annulaire reliée à l'extérieur du passage tubulaire par l'orifice ou conduit précité d'amenée de ladite matière d'étanchéité et de fixation dans la chambre.

Un tel manchon monté sur le câble peut être introduit à force dans le passage de câble, en obturant celui-ci et en retenant le câble par frottement. La matière d'étanchéité qui remplit la chambre annulaire formée dans le manchon autour du câble s'oppose à tout passage de fluide le long du câble et assure également la retenue du câble dans le manchon. Les rondelles prévues à l'intérieur du manchon et traversées à étanchéité par le câble délimitent de façon positive la chambre annulaire destinée à être remplie de la matière d'étanchéité et de fixation, et s'opposent à toute fuite de cette matière le long du câble.

De préférence, les rondelles précitées sont du type pelable à couches cylindriques superposées de matière, permettant d'adapter facilement leur diamètre interne au diamètre du câble et leur diamètre externe au diamètre du manchon.

Selon une autre caractéristique de l'invention, la surface externe du manchon comprend une denture externe destinée à s'appuyer sur la surface interne du passage de câble et formée par des nervures annulaires inclinées dans un sens facilitant l'introduction du manchon dans le passage et s'opposant à son retrait.

Au moins les nervures annulaires intermédiaires du manchon sont coupées par au moins une rainure longitudinale, reliée à la chambre annulaire interne du manchon, pour le passage de la matière d'étanchéité et de fixation.

Cette matière peut alors obturer à étanchéité aussi bien l'espace annulaire délimité dans le manchon autour du câble que l'espace annulaire se trouvant entre le manchon et la paroi interne du passage précité.

Enfin, l'invention prévoit que le manchon est fendu longitudinalement ou réalisé en deux parties, et qu'il est muni d'un collier extérieur de serrage ou d'un moyen analogue, permettant de le refermer autour du câble.

De cette façon, le manchon peut facilement être monté sur un câble déjà posé dans le passage précité.

Dans ce cas, les rondelles précitées sont également fendues longitudinalement.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique en coupe longitudinale d'un dispositif selon l'invention, monté autour d'un câble et introduit dans un passage de câble;
la figure 2 est une vue en coupe longitudinale selon la ligne II-II de la figure 1;
la figure 3 est une vue de droite du dispositif selon l'invention;
la figure 4 est une vue en coupe transversale du dispositif selon la ligne IV-IV de la figure 1.

Dans l'exemple de réalisation représenté aux dessins, un passage de câble est formé à travers une paroi 10 et est délimité par un tube ou un tronçon de tube 12 à section circulaire, monté à travers la paroi 10 et traversé par un câble 14 ayant un diamètre inférieur au diamètre interne du tube 12.

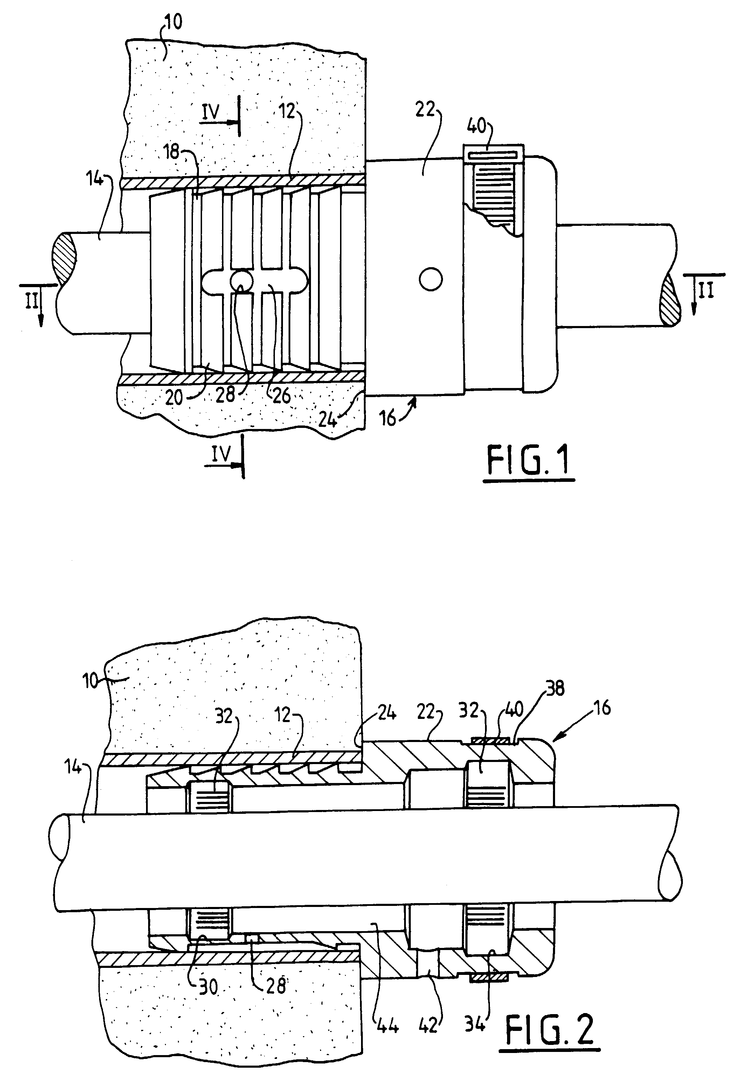

Le dispositif selon l'invention comprend un manchon tubulaire 16 de forme générale cylindrique, réalisé en matériau souple, par exemple en élastomère ou en matière thermoplastique, qui comprend un corps cylindrique 18 à denture périphérique extérieure 20, et une tête 22 de plus grand diamètre reliée au corps 18 par un épaulement 24 formant face d'appui sur une extrémité du tube 12 et sur la paroi 10, comme représenté en figures 1 et 2.

La denture périphérique extérieure 20 du corps 18 est formée d'une série de nervures annulaires parallèles, en saillie sur la surface cylindrique du corps 18 et ayant une section transversale par exemple sensiblement triangulaire, ces nervures étant inclinées dans un sens facilitant l'introduction du manchon 16 dans le tube 12 de la droite vers la gauche en figure 1 et s'opposant à son extraction du tube 12. Le diamètre extérieur de la denture 20 est sensiblement égal au diamètre interne du tube 12, pour permettre un montage à force du manchon 16 dans le tube 12.

Ces nervures permettent, grâce à leur souplesse, de compenser les tolérances de fabrication des tubes 12. La souplesse du matériau du manchon permet également une adaptation à une ovalisation du tube 12.

Les nervures annulaires intermédiaires du corps 18 sont coupées localement par des rainures longitudinales 26 dans lesquelles débouchent des orifices radiaux 28 de la paroi du corps cylindrique 18.

La surface interne du corps 28 comprend, au voisinage de son extrémité libre, une gorge 30 dans laquelle est logée une rondelle 32 de matériau souple, par exemple d'élastomère, qui est montée sensiblement à étanchéité sur le câble 14. Au niveau de la tête 22, une autre gorge annulaire 34 est formée dans la surface interne du manchon 16 et reçoit une autre rondelle 32 du même type que la première, également montée à étanchéité sur le câble 14.

Lorsque le corps 18 a une épaisseur relativement faible, la rondelle 32 montée au voisinage de l'extrémité libre de ce corps peut comprendre des tétons radiaux sur sa surface extérieure, qui viennent se loger dans de petits trous de la paroi cylindrique du corps 18, ce qui évite de former une gorge annulaire interne dans cette paroi.

Ces rondelles 32 sont par exemple du type pelable, et comprennent des couches cylindriques superposées de matière, qui peuvent être enlevées pour donner des dimensions souhaitées au diamètre externe et/ou au diamètre interne des rondelles.

Pour faciliter leur montage sur le câble 14, ces rondelles 32 sont fendues longitudinalement.

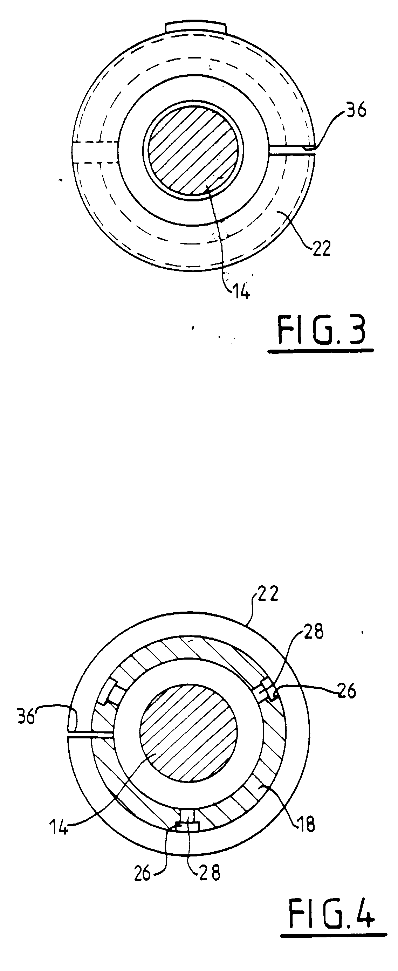

Le manchon 16 est également fendu longitudinalement en 36, comme on le voit dans les figures 3 et 4, pour pouvoir être monté facilement sur le câble 14. Une gorge annulaire 38, formée dans la surface extérieure de la tête 22, reçoit un collier de serrage 40 permettant de refermer le manchon 16 après son montage sur le câble 14.

En variante, le manchon 16 pourrait être réalisé en deux parties appliquées et maintenues l'une sur l'autre par le collier de serrage 40 ou par un moyen analogue.

La tête 22 du manchon comprend encore un orifice radial 42 qui débouche à l'intérieur du manchon dans une chambre annulaire 44 entourant le câble 14 et limitée axialement par les rondelles 32. L'orifice 42 permet l'amenée dans la chambre annulaire 44 d'une matière de remplissage telle par exemple qu'un élastomère autovulcanisant, une résine, une matière expansive ou autre, les orifices radiaux 28 du corps 18 permettant l'amenée de cette matière dans l'espace qui est formé entre le tube 12 et la surface cylindrique extérieure du corps 18, et qui est limité axialement par les nervures annulaires d'extrémité de la denture 20.

Ce dispositif est utilisé de la façon suivante:
les rondelles 32 sont ajustées aux dimensions du câble 14 et à celles des gorges 30 et 34 destinées à les recevoir à l'intérieur du manchon 16, puis le manchon 16 est mis en place sur le câble 14 et les rondelles 32 sont positionnées à l'intérieur du manchon dans les gorges 30 et 34 correspondantes. Le collier de serrage 40 est mis en place dans la gorge 38 du manchon, et vient refermer celui-ci sur le câble 14. On fait ensuite glisser le manchon sur le câble pour introduire son corps cylindrique 18 dans l'extrémité du tube 12 en exerçant une poussée axiale sur la tête 22 du manchon 16 jusqu'à ce que l'épaulement 24 vienne en butée sur l'extrémité du tube 12 ou sur la paroi 10. La matière souple du manchon 16 permet de le monter dans un tube 12 ovalisé, ce qui est assez fréquent dans la pratique. La matière de remplissage est ensuite introduite à l'intérieur du manchon par l'orifice 42 et vient remplir la chambre annulaire 44, ainsi que les rainures 26 et les espaces formés entre la surface interne du tube 12 et les nervures annulaires de la denture 20. La vulcanisation ou le durcissement de la matière de remplissage assure ensuite un montage résistant et étanche du câble 14 dans le tube 12 à la traversée de la paroi 10.

La matière de remplissage vient également fermer une ligne de fuite qui pourrait subsister le long du corps 18 du manchon entre les bords en regard de la fente longitudinale du manchon.

La matière de remplissage qui vient remplir le manchon 16 et l'espace libre entre le tube 12 et le manchon 16 est de préférence une matière capable de polymériser en l'absence d'air. On peut pour cela utiliser une matière du type bi-composant, disponible dans le commerce, dont les deux composants réagissent l'un avec l'autre pour former un copolymère en l'absence d'air. Pour assurer dans tous les cas un échappement de l'air au fur et à mesure que la matière remplit le manchon 16 et l'espace annulaire entre le tube 12 et le manchon, on peut par exemple prolonger une ou plusieurs rainures 26 de façon à couper toutes les nervures annulaires de la denture 20 du manchon.

La matière de remplissage garantit alors une étanchéité totale à la traversée du tube 12 par le câble 14 et une bonne fixation du câble dans le tube.

Le dispositif selon l'invention est démontable par traction sur la tête 22 du manchon 16 par exemple au moyen d'un arrache-moyeu ou analogue.

On peut pour cela former une petite gorge annulaire dans la surface extérieure de la tête 22, au voisinage de l'épaulement 24.

Le dispositif selon l'invention est applicable également au cas où plusieurs câbles 14 sont disposés côte à côte dans un même passage. Il suffit dans ce cas de prévoir plusieurs passages cylindriques voisins à l'intérieur du manchon 16, et de garnir chaque passage cylindrique de rondelles 32.

De façon générale, le dispositif selon l'invention est applicable aux cas où le passage de câble est accessible d'un seul côté et où l'espace libre à une extrémité du passage de câble est très limité.

## Revendications

1. Dispositif d'obturation d'un passage tubulaire de câble, comprenant un manchon (16) destiné à être monté autour du câble (14) et introduit dans ledit passage (12), ce manchon comprenant un orifice ou conduit (42) permettant son remplissage par une matière d'étanchéité et de fixation telle qu'un élastomère autovulcanisant, une résine ou une matière expansive, le manchon ayant, au moins localement, un diamètre externe sensiblement égal au diamètre interne du passage de câble, caractérisé en ce que le manchon (16) est réalisé en une matière souple telle qu'un élastomère ou un thermoplastique et comprend des rondelles (32) de matière souple montées dans des gorges (30, 34) de la surface interne du manchon et traversées à étanchéité par le câble (14) en délimitant entre elles dans le manchon et autour du câble une chambre annulaire (44) reliée à l'extérieur du passage tubulaire (12) par l'orifice ou conduit (42) précité d'amenée de ladite matière d'étanchéité et de fixation dans la chambre (44).

2. Dispositif selon la revendication 1, caractérisé en ce que les rondelles (32) sont du type pelable, à couches cylindriques superposées de matière.

3. Dispositif selon la revendication 1 ou 2, caractérisé en ce que les rondelles (32) sont fendues longitudinalement.

4. Dispositif selon l'une des revendications précédentes, caractérisé en ce que la surface externe du manchon (16) comprend une denture externe (20) destinée à s'appuyer sur la surface interne du passage (12) et formée par des nervures annulaires inclinées dans un sens facilitant l'introduction du manchon (14) dans le passage (12) et s'opposant à son retrait.

5. Dispositif selon la revendication 4, caractérisé en ce que les nervures annulaires intermédiaires du manchon sont coupées par au moins une rainure longitudinale (28) reliée à la chambre annulaire interne (44) du manchon pour le passage de la matière d'étanchéité et de fixation.

6. Dispositif selon l'une des revendications précédentes, caractérisé en ce que le manchon (16) est fendu longitudinalement ou réalisé en deux parties et est muni d'un collier extérieur de serrage (40) permettant de le refermer autour du câble (14).

7. Dispositif selon l'une des revendications précédentes, caractérisé en ce que le manchon (16) comprend un épaulement (24) d'appui sur une extrémité du passage (12).

8. Dispositif selon l'une des revendications précédentes, caractérisé en ce que le manchon (16) monté dans le passage (12) peut être extrait de ce passage par traction sur son extrémité extérieure.

## Patentansprüche

1. Abdichtungsvorrichtung für eine rohrförmige Kabeldurchführung, mit einer Muffe (16), die dazu bestimmt ist, rund um das Kabel (14) herum angebracht und in die genannte Durchführung (12) eingeführt zu werden, wobei diese Muffe eine Öffnung oder einen Kanal (42) aufweist, die bzw. der ihre Füllung durch ein Abdicht- und Befestigungsmaterial wie etwa ein selbstvulkanisierendes Elastomer, ein Harz oder ein sich ausdehnendes Material gestattet, wobei die Muffe mindestens örtlich einen Außendurchmesser aufweist, der im wesentlichen gleich ist dem Innendurchmesser der Kabeldurchführung, dadurch gekennzeichnet, daß die Muffe (16) aus einem weichen Material wie etwa einem Elastomer oder einem thermoplastischen Material gebildet ist und Scheiben (32) aus weichem Material aufweist, die in Auskehlungen (30, 34) der Innenoberfläche der Muffe angebracht und dichtend vom Kabel (14) durchsetzt sind, wobei sie zwischeneinander in der Muffe und rund um das Kabel eine ringförmige Kammer (44) abgrenzen, die mit der Außenseite der rohrförmigen Durchführung (12) durch die obengenannte Öffnung oder den obengenannten Kanal (42) zur Einführung des genannten Abdicht- und Befestigungsmaterials in die Kammer (44) verbunden ist.

2. Vorrichtung nach Anspruch 1, dadurch gekennzeichnet, daß die Scheiben (32) der Art nach abziehbar sind, mit zylindrischen Schichten, die von Material überlagert sind.

3. Vorrichtung nach Anspruch 1 oder 2, dadurch gekennzeichnet, daß die Scheiben (32) in Längsrichtung geschlitzt sind.

4. Vorrichtung nach einem der vorangehenden Ansprüche, dadurch gekennzeichnet, daß die Außenoberfläche der Muffe (16) eine äußere Zahnung (20) aufweist, die dazu bestimmt ist, gegen die Innenoberfläche der Durchführung (12) anzuliegen, und von ringförmigen Rippen gebildet ist, die in einer Richtung geneigt sind, die das Einführen der Muffe (14) in die Durchführung (12) erleichtert und sich ihrer Entnahme entgegensetzt.

5. Vorrichtung nach Anspruch 4, dadurch gekennzeichnet, daß die zwischenliegenden, ringförmigen Rippen der Muffe durch mindestens eine Längsnut (28) geschnitten sind, die mit der ringförmigen, inneren Kammer (44) der Muffe für den Durchtritt des Abdicht- und Befestigungsmaterials verbunden ist.

6. Vorrichtung nach einem der vorangehenden Ansprüche, dadurch gekennzeichnet, daß die Muffe (16) in Längsrichtung geschlitzt ist oder aus zwei Teilen ausgeführt ist und mit einem außenliegenden Klemmkragen (40) versehen ist, der es gestattet, sie rund um das Kabel (14) zusammenzuhalten.

7. Vorrichtung nach einem der vorangehenden Ansprüche, dadurch gekennzeichnet, daß die Muffe (16) eine Schulter (24) zur Anlage gegen ein Ende der Durchführung (12) aufweist.

8. Vorrichtung nach einem der vorangehenden Ansprüche, dadurch gekennzeichnet, daß die Muffe (16), die in der Durchführung (12) angebracht ist, aus dieser Durchführung durch Aufbringen einer Zugwirkung auf ihr äußeres Ende herausgezogen werden kann.

## Claims

1. A device for closing a tubular cable passage for a cable, the device comprising a sleeve (16) designed to be mounted around the cable (14) and to be inserted in said passage (12), said sleeve having an orifice or duct (42) enabling it to be filled with a sealing and fixing material such as a self-vulcanizing elastomer, a resin, or an expansive material, the sleeve having, at least locally, an outside diameter that is substantially equal to the inside diameter of the cable passage, the device being characterized in that the sleeve (16) is made of a flexible material such as an elastomer or a thermoplastic, and comprises washers (32) of flexible material mounted in grooves (30, 34) in the inside surface of the sleeve and having the cable (14) passing in sealed manner therethrough, defining between them and the sleeve and around the cable, an annular chamber (44) connected to the outside of the tubular passage (12) via the above-mentioned orifice or duct (42) for feeding said sealing and fixing material into the chamber (44).

2. A device according to claim 1, characterized in that the washers (32) are of the peel-off type, having superposed cylindrical layers of material.

3. A device according to claim 1 or 2, characterized in that the washers (32) are split longitudinally.

4. A device according to any preceding claim, characterized in that the outside surface of the sleeve (16) has external teeth (20) for bearing against the inside surface of the passage (12) and formed by annular ribs that slope in a direction that facilitates insertion of the sleeve (14) in the passage (12) and opposes withdrawal thereof.

5. A device according to claim 4, characterized in that the intermediate annular ribs of the sleeve are interrupted by at least one longitudinal groove (28) connected to the internal annular chamber (44) of the sleeve to allow the sealing and fixing material to pass.

6. A device according to any preceding claim, characterized in that the sleeve (16) is split longitudinally or made in two parts and is provided with an external clamping collar (40) enabling it to be closed about the cable (14).

7. A device according to any preceding claim, characterized in that the sleeve (16) includes a shoulder (24) for bearing against an end of the passage (12).

8. A device according to any preceding claim, characterized in that the sleeve (16) mounted in the passage (12) can be extracted from said passage by applying traction to its outside end.
